# EUROPEAN PATENT SPECIFICATION

(11) **EP 3 851 342 B1**
(45) Date of publication and mention of the grant of the patent: **27.03.2024**
(21) Application number: 19858877.4
(22) Date of filing: 10.09.2019
(51) Int. Cl.: B60S 5/06, B60L 50/64, H02J 7/00, G05B 19/00, H01M 50/244, H01M 50/249, H01M 50/262, B60L 53/80, B60K 1/04

(54) **BATTERY BOX UNLOCKING CONTROL SYSTEM, LOCKING CONTROL SYSTEM AND CONTROL METHOD**
SYSTEM ZUR ENTRIEGELUNG EINES BATTERIEKASTENS, VERRIEGELUNGSSTEUERUNGSSYSTEM UND STEUERVERFAHREN
SYSTÈME DE COMMANDE DE DÉVERROUILLAGE DE BOÎTIER DE BATTERIE, SYSTÈME DE COMMANDE DE VERROUILLAGE ET PROCÉDÉ DE COMMANDE

(30) Priority: 10.09.2018 CN 201811062438; 10.09.2018 CN 201811053010
(43) Date of publication of application: 21.07.2021
(73) Proprietor: Aulton New Energy Automotive Technology Group, Shanghai 201315 (CN)
(72) Inventor: ZHANG, Jianping, Shanghai 201315 (CN); CHEN, Zhihao, Shanghai 201315 (CN); LU, Wencheng, Shanghai 201315 (CN)
(74) Representative: Hannke Bittner & Partner mbB Regensburg
(86) International application number: PCT/CN2019/105181
(87) International publication number: WO 2020/052562

(56) References cited:
- CN-A- 101 214 814
- CN-A- 101 284 524
- CN-A- 102 529 667
- CN-U- 202 624 175
- US-A1- 2015 151 723

## Description

### Field of invention

The present invention relates to a battery box unlocking control system, locking control system and control method.

### Prior arts

In the process of replacing a battery box for an electric vehicle, it needs to take out an old battery box of the electric vehicle from a vehicle mounted battery compartment, and put it into a battery compartment of a charging bracket, then take out a new battery box from the charging bracket, and install it into the electric vehicle.

In the existing battery box replacing equipment, the way of taking out a battery box from a battery compartment is, to use a push disk box to be closed to and connected to the battery box, then drive the push disk box back together with the battery box. How to control the travelled distance of forward and back for the push disk box is a difficult problem to be solved in the process of taking out the battery box for the battery box replacing equipment.

The way of installing the battery box into the battery compartment is, to use a push disk box to push the battery box, and push it into the battery compartment; after making sure that the battery box is within the battery compartment, separate the push disk box from the battery box, and drive the push disk box back. How to control the travelled distance of forward and back for the push disk box and the opportune moment of separating the push disk box from the battery box, is a difficult problem to be solved in the process of installing the battery box for the battery box replacing equipment.

D1(CN101214814A) disclosed a vehicle-mounted power battery replacement system, comprising a parallel moving platform, a rotating platform, rails, a vertical lifting device, and a battery tray. The parallel moving platform is located on the rail and can move along the rail. The rotating platform is installed on the parallel moving platform, and the battery tray is set on the rotating platform through the vertical lifting device. An electromagnetic suction device for suctioning the battery box is provided on the battery tray. The present invention makes it more convenient to load and unload the battery box, and the positioning is more accurate. It can control the loading and unloading of the battery box within 3 minutes per operation.

D2(US2015151723A1) disclosed a battery replacement robot with a mobile storage rack includes a mechanical part and an electrical control part. The electrical control part controls a battery replacement device to place, in one step, all battery boxes required by one side of an electric bus that needs battery replacement onto a battery boxstorage rack. A horizontal moving unit moves to a position where a battery needs to be replaced. A battery box replacement device takes down a spent battery box from the electric bus; the battery box replacement device rotates towards one side around a Y axis, and raises or lowers the spent battery box so as to put the spent battery on the battery box storage rack; then the battery box replacement device takes down a charged battery box from the battery box storage rack, rotates to the original position, and installs the battery box in the electric bus.

D3(CN101284524A) disclosed a fast replacement system for an electric vehicle power battery pack, which includes a quick release mechanism and a conveying mechanism. The quick release mechanism comprises a vacuum suction cup or an electromagnetic suction cup, which can pull the battery box out of or push it into the electric vehicle body. The conveying mechanism uses a working mode of three-coordinate translation and rotation, so as to transfer the disassembled battery box to the charging rack and/or insert the battery box taken from the charging rack into the electric vehicle, thus completing the mechanical fast loading and replacement of the electric vehicle power battery pack.

D4(CN102529667A) disclosed a locking device for a vehicle battery box, used to lock the battery box containing the battery to the battery rack. The locking device includes: a positioning mechanism, which consists of two symmetric parts that are used to position the battery box on the battery rack; a locking and unlocking mechanism, which is installed on the battery box and is used to lock and unlock the battery box on the battery rack; and a loading and unloading mechanism, which is used to control the locking and unlocking action of the locking and unlocking mechanism and to load and unload the battery box. Through the coordination of the positioning mechanism, locking mechanism, and loading and unloading mechanism, the present invention can achieve simple, reliable, and external power-independent positioning, locking, unlocking, and loading and unloading actions. Furthermore, in conjunction with the joint mechanism, the loading and unloading of the battery box is more convenient.

### Content of the present invention

The technical problem to be solved in the present invention is for overcoming the defects in prior arts that it is difficult to control the travelled distance of forward and back for a push disk box in the process of taking out and installing a battery box, and the opportune moment of separating the push disk box from the battery box, hence providing a battery box unlocking control system, locking control system and control method.

The present invention solves the above-mentioned technical problem by the appended independent claims 1 & 11.

### Brief description of the drawings

Fig. 1 is a schematic structural diagram of the battery box unlocking control system according to embodiment 1 of the present invention.
Fig.2 is a schematic structural diagram of the battery box unlocking control system according to Fig. 1.
Fig.3 is a schematic module diagram of the battery box unlocking control system according to Fig. 1.
Fig.4 is a schematic structural diagram of the battery box unlocking control system according to embodiment 2 of the present invention.
Fig.5 is a schematic module diagram of the battery box unlocking control system according to embodiment 2 of the present invention.
Fig.6 is a schematic structural diagram of the battery box unlocking control system according to embodiment 3 of the present invention.
Fig.7 is a partial schematic structural diagram of the battery box unlocking control system according to embodiment 4 of the present invention.
Fig.8 is a partial schematic structural diagram of the battery box unlocking control system according to embodiment 4 of the present invention.
Fig.9 is a partial schematic structural diagram of the battery box unlocking control system according to embodiment 4 of the present invention.
Fig. 10 is a schematic module diagram of the battery box unlocking control system according to embodiment 4 of the present invention.
Fig. 11 is a schematic module diagram of the battery box unlocking control system according to embodiment 5 of the present invention.
Fig. 12 is a flow chart of the battery box unlocking control method according to embodiment 6 of the present invention.
Fig. 13 is a flow chart of the battery box unlocking control method according to embodiment 7 of the present invention.
Fig. 14 is a flow chart of the Step 200 of the battery box unlocking control method according to Fig. 13.
Fig. 15 is a flow chart of the Step 500 of the battery box unlocking control method according to Fig. 13.
Fig. 16 is a schematic structural diagram of the battery box locking control system according to embodiment 8 of the present invention.
Fig. 17 is a schematic structural diagram of putting a battery box of the battery box locking control system according to Fig. 16 into a battery compartment.
Fig. 18 is a schematic module diagram of a battery box of the battery box locking control system according to Fig. 16.
Fig. 19 is a schematic module diagram of the battery box locking control system according to embodiment 9 of the present invention.
Fig.20 is a schematic structural diagram of a battery box of the battery box locking control system according to embodiment 10 of the present invention.
Fig.21 is a schematic structural diagram of a battery compartment of the battery box locking control system according to Fig.20.
Fig.22 is a schematic structural diagram of a push disk box of the battery box locking control system according to Fig.20.
Fig.23 is a schematic module diagram of the battery box locking control system according to Fig.20.
Fig.24 is a schematic module diagram of the battery box locking control system according to embodiment 11 of the present invention.
Fig.25 is a schematic module diagram of the battery box locking control system according to embodiment 12 of the present invention.
Fig.26 is a schematic step chart of the battery box locking control method according to embodiment 13 of the present invention.
Fig.27 is a schematic step chart of the battery box locking control method according to embodiment 14 of the present invention.
Fig.28 is a schematic step chart of the battery box locking control method according to embodiment 15 of the present invention.

push disk box (1,3)
push disk box body (11,31)
suction cup (12,32)
magnetic controller (13)
ejector rod (14,33)
second controller (15,5)
first controller (2,4)
first detection unit (3,6)
battery box (4,1)
magnetic disk (41,11)
locking tongue (42,12)
button (43,13)
third detection unit (5,8)
fifth detection unit (6)
battery compartment (7,2)
lock base (71,21)
second detection unit (8,7)
fourth detection unit (9,9)
third controller (34)

Embodiment 1 - Embodiment 7: push disk box 1; push disk box body 11; suction cup 12; magnetic controller 13; ejector rod 14; second controller 15; first controller 2; first detection unit 3; battery box 4; magnetic disk 41; locking tongue 42; button 43; third detection unit 5; fifth detection unit 6; battery compartment 7; lock base 71; second detection unit 8; fourth detection unit 9.

Embodiment 8 - Embodiment 15: battery box 1; magnetic disk 11; locking tongue 12; button 13; battery compartment 2; lock base 21; push disk box 3; push disk box body 31; suction cup 32; ejector rod 33; third controller 34; first controller 4; second controller 5; first detection unit 6; second detection unit 7; third detection unit 8; fourth detection unit 9.

### Detailed description of the preferred embodiment

The following embodiments further illustrate the present invention, but the present invention is not limited by the following embodiments thereto.

### Embodiment 1

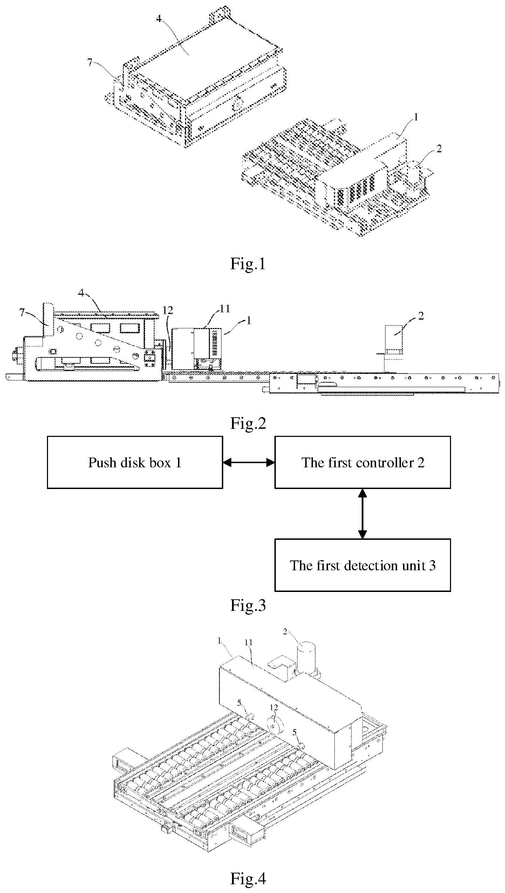

As shown in Fig.1 and Fig.2, the battery box unlocking control system comprises a push disk box 1 and a first controller 2, and the push disk box 1 comprises a push disk box body 11 and a suction cup 12, and the suction cup 12 is telescopically placed on a surface of the push disk box body 11; the first controller 2 is used to drive the push disk box 1 forward, so as to make the suction cup 12 of the push disk box 1 fit with the battery box 4. When it is needed to take out the battery box 4 from a battery compartment 7, the first controller 2 drives the push disk box 1 forward, till the suction cup 12 of the push disk box 1 fits with the battery box 4. When the push disk box 1 connects with the battery box 4 together, the first controller 2 controls the push disk box 1 to go back, then the battery box 4 can be pulled out from the battery compartment 7.

As shown in Fig.3, the battery box unlocking control system further comprises a first detection unit 3, the first detection unit 3 is used to send a first signal to the first controller 2 after detecting that the suction cup 12 retracts to a first predetermined position, and the first controller 2 is further used to stop driving the push disk box 1 forward after receiving the first signal.

After the first controller 2 drives the push disk box 1 forward till the suction cup 12 of the push disk box 1 contacts with the battery box 4, in order to judge whether the push disk box 1 fits with the battery box 4 in place or not, the suction cup 12 is set to further retract toward inside of the push disk box body 11, and the first detection unit 3 is set to be used for detecting the retraction position of the suction cup 12. The first predetermined position detected by the first detection unit 3 is the position that the suction cup 12 retracts in place. When the first detection unit 3 detects out the suction cup 12 retracting to the first predetermined position, it proves the suction cup 12 has retracted in place, at this moment the first detection unit 3 sends the first signal to the first controller 2, and the first controller 2 stops driving the push disk box 1 forward after receiving the first signal.

Besides, the first controller 2 is further used to control the push disk box 1 to go back after it stops driving the push disk box 1 forward. After the push disk box 1 is stopped forward, the first controller 2 further can control the push disk box 1 to go back. The detailed way of the above-mentioned the first controller 2 driving the push disk box 1 forward or back, can adopt a gear wheel and a gear rack to guide the moving direction of the push disk box 1, and drive the push disk box 1 to move by a driving motor.

By setting the suction cup 12 to retract a certain distance toward inside of the push disk box body 11, and detecting the preset stop position by the first detection unit 3, it makes the push disk box 1 can be further moved forward a certain distance after it fits with the battery box 4, which ensures the closeness of the push disk box 1 fitting with the battery box 4, and it allows the push disk box 1 to have a buffering distance before it is stopped going forward, which ensures the push disk box 1 can be safely stopped.

### Embodiment 2

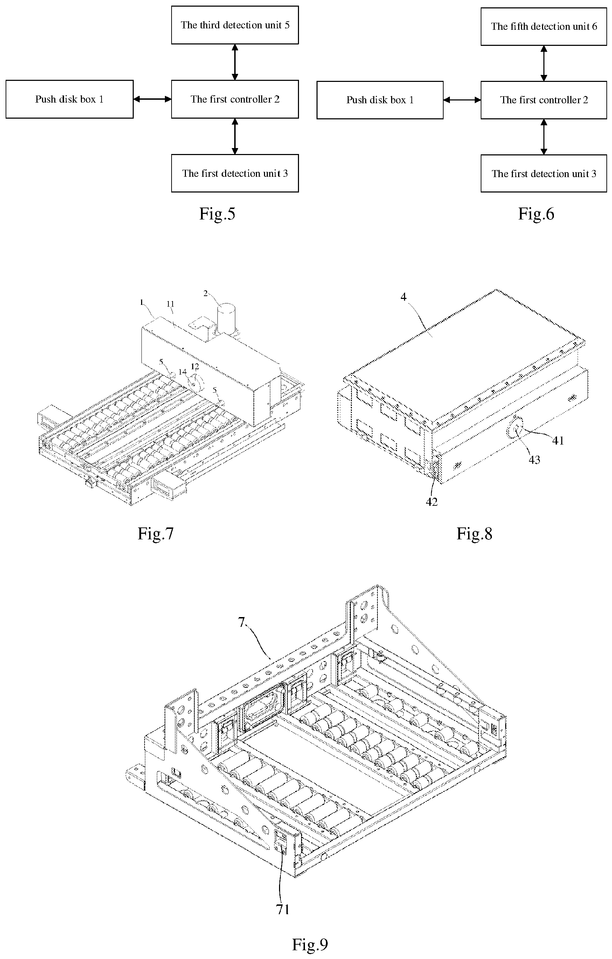

As shown in Fig.4 and Fig.5, the battery box unlocking control system in the present embodiment is a further improvement of the embodiment 1. The battery box unlocking control system further comprises a third detection unit 5, and the third detection unit 5 is arranged on a surface where the push disk box body 11 faces to the battery box 4, and the third detection unit 5 is used to detect whether the distance between the battery box 4 and the push disk box 1 exceeds a predetermined value or not when the push disk box 1 goes back, if yes, then sends a separating signal to the first controller 2, and the first controller 2 is used to pause the push disk box 1 going back after receiving the separating signal.

After the push disk box 1 fits with the battery box 4, the push disk box 1 connects with the battery box 4. When the second controller 2 drives the push disk box 1 back, it also drives the battery box 4 back together. In this process, the third detection unit 5 detects the position of the battery box 4. When the distance between the battery box 4 and the push disk box 1 exceeds the predetermined value, it means the battery box 4 has been separated from the push disk box 1, the third detection unit 5 sends the separating signal to the first controller 2, and the first controller 2 pauses the push disk box 1 going back after receiving the separating signal. With the third detection unit 5, in the process of the push disk box 1 going back, it can alarm for an abnormal condition that the battery box 4 is separated from the push disk box 1.

### Embodiment 3

As shown in Fig.6, the battery box unlocking control system in the present embodiment is a further improvement of the embodiment 1. The battery box unlocking control system further comprises a fifth detection unit 6, and the fifth detection unit 6 is used to detect whether the push disk box 1 arrives at a second limited position or not during it goes back, if yes, then sends a second pause signal to the first controller 2, and the first controller 2 is further used to pause the push disk box 1 going back after receiving the second pause signal.

The second limited position is the limited position which the push disk box 1 can arrive during it goes back. If the fifth detection unit 6 detects the push disk box 1 has arrived at the second limited position, then sends the second pause signal to the first controller 2, and the first controller 2 pauses the push disk box 1 going back after receiving the second pause signal. By setting the fifth detection unit 6, it can prevent the push disk box 1 from exceeding the limited position during it goes back, which ensures the safety in the process of the push disk box 1 moving.

### Embodiment 4

As shown from Fig.7 to Fig. 10, the battery box unlocking control system in the present embodiment is a further improvement of the embodiment 1. As shown from Fig.7 to Fig.8 and Fig. 10, the push disk 1 further comprises a magnetic controller 13, and the suction cup 12 is an electromagnetic suction cup, and the magnetic controller 13 is used to control the suction cup 12 to be powered on after receiving the first signal; the battery box 4 comprises a magnetic disk 41, and the magnetic disk 41 of the battery box 4 is used to fit with the suction cup 12 of the push disk box 1.

When the first detection unit 3 sends the first signal to the first controller 2, it further sends the first signal to the magnetic controller 13. When the first detection unit 3 sends the first signal, it means the suction cup 12 has retracted to a first predetermined position, at this moment, the magnetic controller 13 controls the suction cup 12 to be powered on, and the suction cup 12 generates magnetic force, and the suction cup 12 and the magnetic disk 41 attract each other.

As shown from Fig.7 to Fig.9, the battery box 4 further comprises a locking tongue 42 and a button 43, the locking tongue 42 fits with a lock base 71 of a battery compartment 7, and the button 43 connects with the locking tongue 42; and the push disk box 1 further comprises a ejector rod 14 and a second controller 15, the second controller 15 is used to control the ejector rod 14 to stretch out and retract back, and the ejector rod 14 is used to drive the locking tongue 42 to be separated from the lock base 71 after pressing the button 43. After the ejector rod 14 stretches out and when the push disk box 1 fits with the battery box 4, the ejector rod 14 presses the button 43, and the locking tongue 42 retracts and is separated from the lock base 71, at this moment, the battery box 4 can be pulled out from the battery compartment 7.

Wherein, the second controller 15 is communication connected with the first controller 2; and the first controller 2 is used to send a second signal to the second controller 15 when driving the push disk box 1 forward to a second predetermined position, the second controller 15 is used to control the ejector rod to stretch out after receiving the second signal. The second predetermined position can be set as a position where the push disk 1 is closer to the battery box 4, for example, the position the push disk box 4 is approximate 200 mm away from the battery box 4. When the push disk box 4 goes forward to the second predetermined position, the first controller 2 sends the second signal to the second controller 15, and the second controller 15 controls the ejector rod to stretch out, to be convenient when the push disk box 1 fits with the battery box 4, the ejector rod 14 can press the button 43 to make the locking tongue 42 to retract and be separated from the lock base 71.

The battery box unlocking control system further comprises a second detection unit 8, and the second detection unit 8 is used to send an allowable signal to the first controller 2 after detecting that the locking tongue 42 and the lock base 71 are at a separating status, and the first controller 2 is further used to judge whether the allowable signal is received or not after it stops the push disk box 1 going forward, if yes, then control the push disk box 1 to go back.

After the second detection unit 8 detects the locking tongue 42 and the lock base 71 are at the separating status, it sends the allowable signal to the first controller 2, then the first controller 2 controls the push disk box 1 to go back. If the second detection unit 8 does not send the allowable signal to the first controller 2, it means the locking tongue 42 has not yet been separated from the lock base 71, the battery box 4 and the battery compartment 7 are still in a locking status, at this moment, the first controller 2 forbids the push disk box 1 going back.

### Embodiment 5

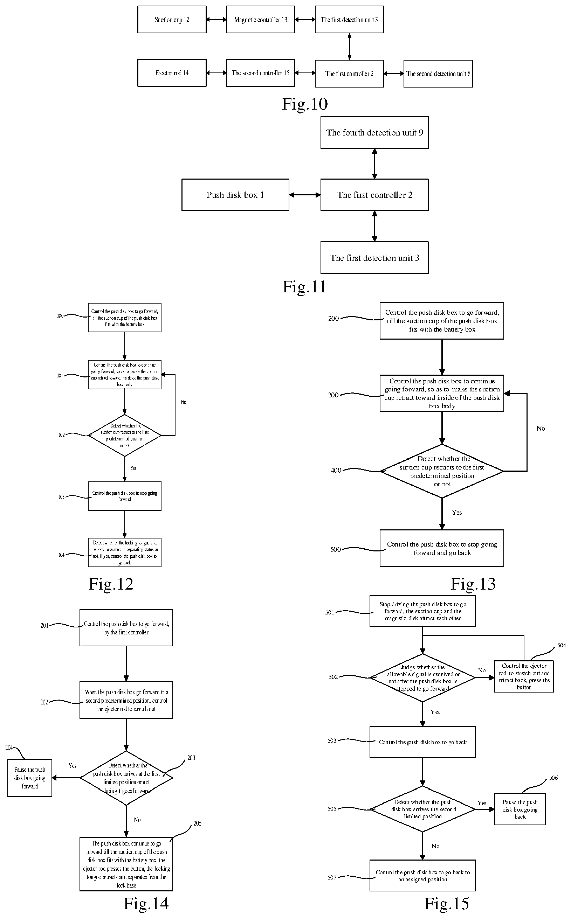

As shown in Fig. 11, the battery box unlocking control system in the present embodiment is a further improvement of the embodiment 1.

The battery box unlocking control system further comprises a fourth detection unit 9, and the fourth detection unit 9 is used to detect whether the push disk box 1 arrives at a first limited position or not during it goes forward, if yes, then send a first pause signal to the first controller 2, and the first controller 2 is further used to pause the push disk box 1 going forward after receiving the first pause signal.

The first limited position is the limited position which the push disk box 1 can arrive during it goes forward. If the fourth detection unit 9 detects the push disk box 1 has arrived at the first limited position, then sends the first pause signal to the first controller 2, and the first controller 2 pause the push disk box 1 going forward after receiving the first pause signal. By setting the fourth detection unit 9, it can prevent the push disk box 1 from exceeding the limited position during it goes forward, which ensures the safety in the process of the push disk box 1 moving.

### Embodiment 6

As shown in Fig. 12, the present embodiment is a battery box unlocking control method, the battery box unlocking control method can be applicable for the above-mentioned battery box unlocking control system. The battery box unlocking control method comprises the following steps,
Step 101, when the suction cup 12 of the push disk box 1 fits with the battery box 4, control the push disk box 1 to continue going forward, so as to make the suction cup 12 retract toward inside of the push disk box body 11;
Step 102, detect whether the suction cup 12 retracts to a first predetermined position or not, if yes, then execute the Step 103, if not, then execute the Step 101;
Step 103, control the push disk box 1 to stop going forward.

By the above-mentioned method, it makes the push disk box 1 can be further moved forward a certain distance after it fits with the battery box 4, which ensures the closeness of the push disk box 1 fitting with the battery box 4, meanwhile, it makes the push disk box 1 to have a certain buffering distance before it is stopped, which ensures the push disk box 1 can be safely stopped.

Wherein, after the push disk box 1 is stopped forward, the Step 103 further comprises the following step: Step 1031, control the push disk box 1 to go back. After the push disk box 1 is stopped going forward, and the push disk box 1 connects with the battery box 4, it further needs to control the push disk box 1 to go back, and take out the battery box 4 from a battery compartment 7.

Wherein, in the executing process of the Step 1031, it further comprises the following step, detect whether the distance between the battery box 4 and the push disk box 1 exceeds the predetermined value or not, if yes, then pauses the push disk box 1 going back. During the push disk box 1 driving the battery box 4 to go back, if detecting the distance between the battery box 4 and the push disk box 1 exceeds the predetermined value, it means the push disk box 1 has been separated from the battery box 4, at this moment, then pauses the push disk box 1 going back.

Wherein, in the executing process of the Step 101, it further comprises the following step, detect whether the push disk box 1 arrives at the second limited position or not, if yes, then pause the push disk box 1 going back. The second limited position is the limited position which the push disk box 1 can arrive during it goes back. During the push disk box 1 going back, if the push disk box 1 exceeds the second limited position, then it needs to pause the push disk box going back, so as to ensure the safety during the push disk box 1 moving.

Wherein, in the Step 101, the suction cup 12 of the push disk box 1 fits with the magnetic disk 41 of the battery box 4; in the Step 13, after controlling the push disk box 1 to stop going forward, it further controls the suction cup 12 to be powered on. After the push disk box 1 stops going forward, the suction cup 12 of the push disk box 1 fits with the magnetic disk 41 of the battery box 4, and the suction cup is powered on, to generate a suction force between the suction cup 12 and the magnetic disk 41 to attract each other.

Wherein, in the Step 101, after the suction cup 12 of the push disk box 1 fits with the battery box 4, the ejector rod 14 presses the button 43, so as to make the button 43 drive the locking tongue 42 to be separated from the lock base 71. Before the suction cup 12 of the push disk box 1 fits with the battery box 4, the locking tongue 42 is locked in the lock base 71, to fix the battery box 4 in the battery compartment 7. After the suction cup 12 of the push disk box 1 fits with the battery box 4, the ejector rod 14 presses the button 43, drives the locking tongue 42 to be separated from the lock base 71, then the push disk box 1 can make the battery box 4 be pulled out from the battery compartment 7.

Wherein, prior to the Step 101, it further comprises the following step: before the suction cup 12 of the push disk box 1 fits with the battery box 4, the ejector rod 14 stretches out. During the push disk box 1 goes forward, stretching out the ejector rod 14 in advance, to be ready for making the ejector rod 14 can be pressed the button 43 timely.

Wherein, after the Step 103, it further comprises the following step, Step 104, detect whether the locking tongue 42 and the lock base 71 are at a separating status or not, if yes, then control the push disk box 1 to go back. Before controlling the push disk box 1 to go back, detect whether the locking tongue 42 and the lock base 71 are at a separating status or not, that is detecting whether it is at a separating status or not between the push disk box 1 and the battery box 4. Only if the push disk box 1 and the battery box 4 are under a separating status, then control the push disk box 1 to go back.

Wherein, prior to the Step 101, it further comprises the following step, Step 100, control the push disk box 1 to go forward, till the suction cup 12 of the push disk box 1 fits with the battery box 4.

Wherein, in the executing process of the Step 100, it further comprises the following step, detect whether the push disk box 1 arrives at the first limited position or not, if yes, then pause the push disk box 1 going forward. The first limited position is the limited position which the push disk box 1 can arrive during it goes forward. if detect the push disk box 1 arrives at the first limited position, then pauses the push disk box going forward, so as to ensure the safety during the push disk box 1 moving.

### Embodiment 7

The present embodiment is a battery box unlocking control method, the battery box unlocking control method can be applicable for the above-mentioned battery box unlocking control system.

As shown in Fig. 13, the battery box unlocking control method comprises the following steps,
Step 200, control the push disk box 1 to go forward, till the suction cup 12 of the push disk box 1 fits with the battery box 4;
Step 300, when the suction cup 12 of the push disk box 1 fits with the battery box 4, the first controller 2 controls the push disk box 1 to continue going forward, so as to make the suction cup 12 retract toward inside of the push disk box body 11;
Step 400, the first detection unit 3 detects whether the suction cup 12 retracts to a first predetermined position or not, if yes, then execute the Step 500, if not, then execute the step 300;
Step 500, control the push disk box 1 to stop going forward and go back.

Wherein, as shown in Fig. 14, the Step 200 comprises the following steps:
Step 201, control the push disk box 1 to go forward by the first controller 2;
Step 202, when the push disk box 1 go forward to a second predetermined position, the first controller 2 sends a second signal to the second controller 15, and the second controller 15 controls the ejector rod 14 to stretch out;
Step 203, the fourth detection unit 9 detects whether the push disk box 1 arrives at the first limited position or not during it goes forward, if yes, then execute the Step 204, if not, then execute the Step 205;
Step 204, the fourth detection unit 9 sends a first pause signal to the first controller 2, and after the first controller 2 receives the first pause signal, it pauses the push disk box 1 going forward; at this moment, it shows that an abnormal problem occurred during the push disk box 1 goes forward, and it needs to go into an abnormal problem handling process;
Step 205, the push disk continue to go forward, till the suction cup 12 of the push disk box 1 fits with the battery box 4, and the ejector rod 14 presses the button 43, and the locking tongue 42 retracts and separates from the lock base 71.

Wherein, as shown in Fig. 15, the step 500 comprises the following steps:
Step 501, the first detection unit 3 sends the first signal to the first controller 2 and the magnetic controller 13, after the first controller 2 receives the first signal, it stops driving the push disk box 1 to go forward, the magnetic controller 13 controls the suction cup 12 to be powered on, the suction cup 12 generates the magnetic force, and
the suction cup 12 and the magnetic disk 41 attract each other;
Step 502, after the second detection unit 8 detects the locking tongue 42 and the lock base 71 are at a separating status, it sends an allowable signal to the first controller 2, and the first controller 2 judges whether the allowable signal is received or not after it stops the push disk box 1 going forward, if yes, then execute the Step 503, if not, then execute the step 504;
Step 503, the first controller 2 controls the push disk box 1 to go back, then execute the step 505;
Step 504, the second controller 15 controls the ejector rod 14 to stretch out and retract back, press the button 43, then execute the Step 502;
Step 505, the fifth detection unit 6 detects whether the push disk box 1 arrives the second limited position or not during it goes back, if yes, then execute the Step 506, if not, then execute the Step 507;
Step 506, the fifth detection unit 6 sends the second pause signal to the first controller 2, and the first controller 2 pauses the push disk box 1 going back when it receives the second pause signal; at the moment, it shows an abnormal problem occurred during the push disk box 1 goes forward, and it needs to go into an abnormal problem handling process;
Step 507, the first controller 2 controls the push disk box 1 to go back to an assigned position.

### Embodiment 8

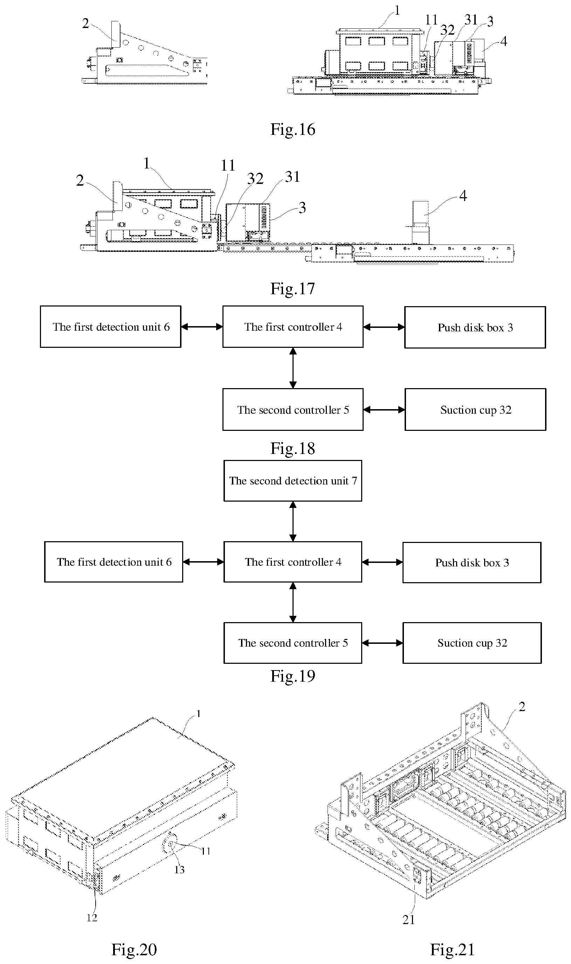

As shown from Fig.16 to Fig.18, it is an embodiment of a battery box locking control system in the present invention. The battery box locking control system is used to install a battery box 1 into a battery compartment 2. The battery box locking control system comprises a push disk box 3, a first controller 4, a second controller 5 and a first detection unit 6, the push disk box 3 comprises a push disk box body 31 and a suction cup 32, and the suction cup 32 can be telescopically arranged on a surface of the push disk box body 31, the suction cup 32 of the push disk box 3 is used to fit with the battery box 1; the first controller 4 is used to drive the push disk box 3 forward, so as to make the battery box 1 go into the battery compartment 2; the second controller 5 is used to switch under the two conditions of connecting or separating the push disk box with the battery box; the first detection unit 6 is used to send a first signal to the first controller 4 and the second controller 5 after detecting that the suction cup 32 retracts to a first predetermined position, the first controller 4 is further used to stop driving the push disk box 3 forward after receiving the first signal, and the second controller 5 is further used to control the push disk box 3 to be separated from the battery box 1 after receiving the first signal.

As shown in Fig.16, the battery box 1 is placed on a platform and connects with the push disk box 3, the first controller 4 drives the push disk box 3 forward, thereby pushing the battery box 1 forward. As shown in Fig.17, the first controller 4 drives the push disk box 3 forward, till the battery box 1 goes into the battery compartment 2. At this moment, the push disk box 3 can continue to go forward, to make the suction cup 32 retract into the push disk box body 31.

The first predetermined position is set as the limited position where the suction cup 32 retracting back. As shown in Fig.18, the first detection unit 6 sends the first signal to the first controller 4 after detecting the suction cup 32 retracts to the first predetermined position, and the first controller 4 stops driving the push disk box 3 forward after receiving the first signal. The first signal from the first detection unit 6 is further sent to the second controller 5, and the second controller 5 controls the push disk box 3 to be separated from the battery box 1 after receiving the first signal.

By setting the retractable suction cup 32 and the first detection unit 6 to detect the limited position, it makes after the battery box 1 goes into the battery compartment 2, the push disk box 3 can continue to go forward and slowly stop, so that the push disk box 3 has a buffering process before it is stopped, which ensures the push disk box 3 can be stopped stably and ensures the battery box 1 is installed in place in the battery compartment 2.

Wherein, a specific way of the second controller 5 controlling the push disk box 3 to separate from the battery box 1 is as following. The suction cup 32 is an electromagnetic disk, and the battery box 1 comprises a magnetic disk 11, the magnetic disk 11 of the battery box 1 is used to attract to the suction cup 32 of the push disk box 3, and the second controller 5 is used to control the suction cup 32 to be powered off after receiving the first signal, so as to separate the push disk box 3 from the battery box 1.

The first controller 4 is further used to control the push disk box 3 to go back after it stops the push disk box 3 going forward. After the battery box 1 is installed in place in the battery compartment 2 and making sure the push disk box 3 has been separated from the battery box 1, the first controller 4 controls the push disk box 3 to go back.

Wherein, the first detection unit 6 can be a sensor. The detection position of the sensor is the first predetermined position, after the suction cup 32 retracting to the first predetermined position, the sensor can detect the suction cup 32, and thereby sending the first signal to show the suction cup 32 has arrived in place. Besides the sensor, the first detection unit 6 can also be other detecting equipment which is able to detect the position of the suction cup 32.

### Embodiment 9

As shown in Fig. 19, the battery box locking control system in the present embodiment is a further improvement of the embodiment 8. The battery box locking control system further comprises a second detection unit 7, and the second detection unit 7 is used to detect whether the push disk box 3 arrives at the first limited position or not during it goes back, if yes, then send the first pause signal to the first controller 4, and the first controller 4 is further used to pause the push disk box 3 going back after receiving the first pause signal.

The first limited position is the limited position where the push disk box 3 can arrive during it goes back. If the push disk box 3 arrives the first limited position, it means an abnormal problem occurred during the push disk box 3 goes back, the first controller 4 pauses the push disk box 3 going back, and goes into an abnormal problem handling phrase.

Wherein, the second detection unit 7 can be a couple of infrared receiver and infrared transmitter, the infrared receiver is set on a mobile platform of the push disk box 3, and the position where it is set on is the first limited position during the push disk box 3 goes back, and the infrared transmitter is set on the push disk box 3. When the push disk box 3 moves to the first limited position, an infrared ray sent by the infrared transmitter is received by the infrared receiver, at this moment, the infrared receiver sends the first pause signal to the first controller 4. When the first controller 4 receives the first pause signal, it shows the push disk box 3 is at the first limited position, which means an abnormal problem occurred during the push disk box 3 goes forward, the first controller 4 pauses the push disk box 3 going back, and goes into an abnormal problem handling phrase.

### Embodiment 10

As shown from Fig.20 to Fig.21, the battery box locking control system in the present embodiment is a further improvement of the embodiment 8. The battery box 1 further comprises a locking tongue 12 and a button 13, the locking tongue 12 fits with a lock base 21 of the battery compartment 2, and the button 13 connects with the locking tongue 12. When the battery box 1 is installed into the battery compartment 2, the locking tongue 12 of the battery box 1 is stuck in the lock base 21 of the battery compartment 2.

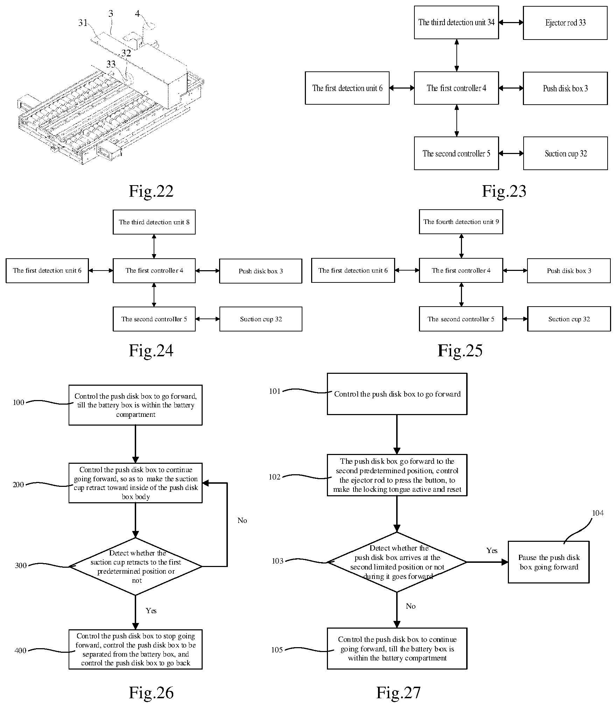

As shown from Fig.22 to Fig.23, the push disk box 3 further comprises a ejector rod 33 and a third controller 34, the third controller 34 is used to control the ejector rod 33 to stretch out and retract back, and the ejector rod 33 is used to drive the locking tongue 12 to active and reset after pressing the button 13. Wherein, the third controller 34 is communication connected with the first controller 4; the first controller 4 is used to send a second signal to the third controller 34 when driving the push disk box to the second predetermined position, and the third controller 34 is used to control the ejector rod 33 to press the button 13 after receiving the second signal.

The second predetermined position is set before the battery box 1 going into the battery compartment 2, during the push disk box 3 pushes the battery box 1, the ejector rod 33 presses the button 13, to make sure the locking tongue 12 reset to a ready status for locking.

### Embodiment 11

As shown in Fig.24, the battery box locking control system in the present embodiment is a further improvement of the embodiment 8. The battery box locking control system further comprises a third detection unit 8, and the third detection unit 8 is used to send an allowable signal to the first controller 4 after detecting that the locking tongue 12 and the lock base 21 are at a locking status, the first controller 4 is further used to judge whether the allowable signal is received or not after stopping the push disk box 3 going forward, if yes, then controls the push disk box 3 to go back.

Before the push disk box 3 going back, firstly detecting whether the locking tongue 12 and the lock base 21 are at a locking status or not by the third detection unit 8. Only if under the condition that the locking tongue 12 and the lock base 21 are at the locking status, namely the battery box 1 is installed in place in the battery compartment 2, the push disk box 3 is allowed to go back.

Wherein, the third detection unit 8 can be a sensor. When the sensor detects the locking tongue 12 is placed in the lock base 21, it means the locking tongue 12 and the lock base 21 are at a locking status, the sensor sends an allowable signal to the first controller 4 which the allowable signal allows the push disk box 3 to go back, so that the first controller 4 can control the push disk box 3 to go back. Besides the sensor, the third detection unit 8 can also be other detecting equipment which is able to detect the position of the locking tongue 12.

### Embodiment 12

As shown in Fig.25, the battery box locking control system in the present embodiment is a further improvement of the embodiment 8. The battery box locking control system further comprises a fourth detection unit 9, the fourth detection unit 9 is used to detect whether the push disk box 3 arrives at the second limited position or not during it goes forward, if yes, then send a second pause signal to the first controller 4, and the first controller 4 is further used to pause the push disk box 3 going forward after receiving the second pause signal.

The second limited position is the limited position where the push disk box 3 can arrive during it goes forward. if the push disk box 3 arrives at the second limited position, it means an abnormal problem occurred during the push disk box 3 goes forward, the first controller 4 pauses the push disk box 3 going forward, and goes into an abnormal problem handling phrase.

Wherein, the fourth detection unit 9 can be a couple of infrared receiver and infrared transmitter, the infrared receiver is set on a mobile platform of the push disk box 3, and the position where it is set on is the second limited position during the push disk box 3 goes forward, and the infrared transmitter is set on the push disk box 3. When the push disk box 3 moves to the second limited position, an infrared ray sent by the infrared transmitter is received by the infrared receiver, at this moment, the infrared receiver sends the second pause signal to the first controller 4. When the first controller 4 receives the second pause signal, it shows the push disk box 3 is at the second limited position, which means an abnormal problem occurred during the push disk box 3 goes forward, the first controller 4 pauses the push disk box 3 going forward, and goes into an abnormal problem handling phrase.

### Embodiment 13

As shown in Fig.26, it is a battery box locking control method, the battery box locking control method can be used for the above-mentioned battery box locking control system. The battery box locking control method comprises the following steps:
Step 100, the suction cup 32 of the push disk box 3 fits with the battery box 1 and remain connected, the battery box 1 is ahead of the push disk box 3, and control the push disk box 3 to go forward, till the battery box 1 is within the battery compartment 2;
Step 200, when the battery box 1 is within the battery compartment 2, control the push disk box 3 continue to go forward, so as to make the suction cup 32 retract toward inside of the push disk box body 31;
Step 300, the first detection unit 6 detects whether the suction cup 32 retracts to the first predetermined position or not, if yes, then execute the Step 400; if not, then execute the step 200;
Step 400, control the push disk box 3 to stop going forward, and control the push disk box 3 to be separated from the battery box 1, and control the push disk box 3 to go back an assigned position.

After the battery box 1 is installed in the battery compartment 2, the push disk box 3 can continue to go forward and stop slowly, to make the push disk box 3 to have a buffering process before it is stopped, which ensures the push disk box 3 can be stopped stably, and ensures the battery box 1 is installed in place in the battery compartment 2.

### Embodiment 14

As shown in Fig.27, the battery box locking control method in the present embodiment is a further improvement for the embodiment 13. The Step 100 in the battery box locking control method comprises the following steps:
Step 101, the suction cup 32 of the push disk box 3 fits with the battery box 1 and remain connected, the battery box 1 is ahead of the push disk box 3, and the first controller 4 controls the push disk box 3 to go forward;
Step 102, when the first controller 4 drives the push disk box 3 forward to the second predetermined position, it sends the second signal to the third controller 34, the third controller 34 is used to control the ejector rod 33 to press the button 13 after receiving the second signal, to make the locking tongue 12 active and reset.
Step 103, the fourth detection unit 9 detects whether the push disk box 3 arrives at the second limited position or not during it goes forward, if yes, then execute the Step 104, if not, then execute the Step 105;
Step 104, the fourth detection unit 9 sends the second pause signal to the first controller 4, and the first controller 4 pauses the push disk box 3 going forward after receiving the second pause signal;
Step 105, the first controller 4 controls the push disk box 3 to continue going forward, till the battery box 1 is within the battery compartment 2.

By the above-mentioned method, it can make the push disk box 3 to push the battery box 1, till the battery box 1 is smoothly installed into the battery compartment 2.

### Embodiment 15

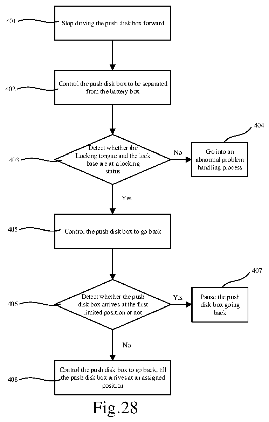

As shown in Fig.28, the battery box locking control method in the present embodiment is a further improvement for the embodiment 13. The Step 400 in the battery box locking control method comprises the following steps:
Step 401, the first detection unit 6 sends the first signal to the first controller 4, and the first controller 4 stops driving the push disk box 3 forward after receiving the first signal;
Step 402, the first detection unit 6 sends the first signal to the second controller 5, and the second controller 6 controls the push disk box 3 to be separated from the battery box 1 after receiving the first signal;
Step 403, the third detection unit 8 detects whether the locking tongue 12 and the lock base 21 are at a locking status or not, if not, then execute the Step 404, if yes, then execute the Step 405;
Step 404, goes into an abnormal problem handling process, and the process ends;
Step 405, the third detection unit 8 sends an allowable signal to the first controller 4, and the first controller 4 controls the push disk box 3 to go back;
Step 406, the second detection unit 7 detects whether the push disk box 3 arrives at the first limited position or not during it goes back, if yes, then execute the Step 407, if not, then execute the Step 408;
Step 407, the second detection unit 7 sends the first pause signal to the first controller 4, and the first controller 4 pauses the push disk box 3 going back after receiving the first pause signal; at this moment, it proves an abnormal problem occurred during the push disk box 3 moving, and goes into an abnormal problem handling process;
Step 408, the first controller 4 controls the push disk box 3 to go back, till the push disk box 4 arrives at an assigned position.

By the above-mentioned method, it can make the push disk box 3 to smoothly go back to the assigned position.

## Claims

1. A battery box locking or unlocking control system, **characterized in that** the battery box (4,1) locking and unlocking control system comprises:
a push disk box (1,3), the push disk box (1,3) comprises a push disk box body (11,31) and a suction cup (12,32), and the suction cup (12,32) is telescopically arranged on a surface of the push disk box body (11,31) such that it can be configured to be retracted toward inside of the push disk box body (11,31);
a first controller (2,4);
a second controller (15,5), the second controller (15,5) is used to switch under the two conditions of connecting or separating the push disk box (1,3) with the battery box (4,1);
a first detection unit (3,6), the first detection unit (3,6) is used to send a first signal to the first controller (2,4) and the second controller (15,5) after detecting that the suction cup (12,32) is retracted to a first predetermined position;
wherein for the unlocking the battery box (4,1):
the first controller (2,4) is used to drive the push disk box (1,3) forward, so as to make the suction cup (12,32) of the push disk box (1,3) fit with a battery box (4,1);
and the first controller (2,4) is further used to stop driving the push disk box (1,3) forward after receiving the first signal;
or,
wherein for the locking the battery box (4,1):
the suction cup (12,32) of the push disk box (1,3) is used to fit with the battery box (4,1);
the first controller (2,4) is used to drive the push disk box (1,3) forward, so as to make the battery box (4,1) go into the battery compartment (7,2), and the first controller (2,4) is further used to stop driving the push disk box (1,3) forward after receiving the first signal, and the second controller (15,5) is further used to control the push disk box (1,3) to be separated from the battery box (4,1) after receiving the first signal.

2. The battery box locking or unlocking control system according to claim 1, **characterized in that** the first controller (2,4) is further used to control the push disk box (1,3) to go back after it stops driving the push disk box (1,3) forward.

3. The battery box locking or unlocking control system according to claim 2, **characterized in that** the battery box (4,1) unlocking control system further comprises a third detection unit (5,8), and the third detection unit (5,8) is arranged on a surface where the push disk box body (11,31) faces to the battery box (4,1), and the third detection unit (5,8) is used to detect whether the distance between the battery box (4,1) and the push disk box (1,3) exceeds the predetermined value or not when the push disk box (1,3) goes back, if yes, then sends a separating signal to the first controller (2,4) and the first controller (2,4) is used to pause the push disk box (1,3) going back after receiving the separating signal;
and/or, the battery box (4,1) unlocking control system further comprises a fifth detection unit (6), and the fifth detection unit (6) is used to detect whether the push disk box (1,3) arrives at a second limited position or not during it goes back, if yes, then sends a second pause signal to the first controller (2,4), and the first controller (2,4) is further used to pause the push disk box (1,3) going back after receiving the second pause signal.

4. The battery box locking or unlocking control system according to at least one of claims 1-3, **characterized in that**:
the push disk box (1,3) further comprises a magnetic controller (13), the suction cup (12,32) is an electromagnetic suction cup (12,32), the first detection unit (3,6) is further used to send the first signal to the magnetic controller (13), and the magnetic controller (13) is used to control the suction cup (12,32) to be powered on after receiving the first signal;
the suction cup (12,32) of the push disk box (1,3) is used to fit with the magnetic disk (41,11) of the battery box (4,1).

5. The battery box locking or unlocking control system according to at least one of claims 1-4, **characterized in that**:
the push disk box (1,3) further comprises a ejector rod (14,33) and a second controller (15,5), the second controller (15,5) is used to control the ejector rod (14,33) to stretch out and retract back, and the ejector rod (14,33) is used to drive a locking tongue (42,12) of the battery box (4,1) that fits with a lock base (71,21) of a battery compartment (7,2) to be separated from the lock base (71,21) after pressing a button (43,13) of the battery box (4,1) that connects with the locking tongue (42,12).

6. The battery box locking or unlocking control system according to claim 5, **characterized in that**:
the second controller (15,5) is communication connected with the first controller (2,4); the first controller (2,4) is used to send a second signal to the second controller (15,5) when driving the push disk box (1,3) forward to a second predetermined position, and the second controller (15,5) is used to control the ejector rod (14,33) to stretch out after receiving the second signal;
and/or, the battery box (4,1) unlocking control system further comprises a second detection unit (8,7), the second detection unit (8,7) is used to send an allowable signal to the first controller (2,4) after detecting that the locking tongue (42,12) and the lock base (71,21) are at a separating status, and the first controller (2,4) is further used to judge whether the allowable signal is received or not after it stops the push disk box (1,3) going forward, if yes, then controls the push disk box (1,3) to go back.

7. The battery box locking or unlocking control system according to at least one of claims 1-6, **characterized in that**: the battery box (4,1) unlocking control system further comprises a fourth detection unit (9,9), the fourth detection unit (9,9) is used to detect whether the push disk box (1,3) arrives at a first limited position or not during it goes forward, if yes, then sends a first pause signal to the first controller (2,4), and the first controller (2,4) is further used to pause the push disk box (1,3) going forward after receiving the first pause signal.

8. The battery box locking or unlocking control system according to at least one of claims 1-7, **characterized in that**: the first controller (2,4) is further used to control the push disk box (1,3) to go back after it stops driving the push disk box (1,3) forward.
preferably, the battery box (4,1) locking control system further comprises a second detection unit (8,7), the second detection unit (8,7) is used to detect whether the push disk box (1,3) arrives at a first limited position or not during it goes back, if yes, sends a first pause signal to the first controller (2,4), and the first controller (2,4) is further used to pause the push disk box (1,3) going back after receiving the first pause signal.

9. The battery box locking or unlocking control system according to at least one of claims 1-8, **characterized in that**: the suction cup (12,32) is an electromagnetic suction cup (12,32),the suction cup (12,32) of the push disk box (1,3) is used to attract to the magnetic disk (41,11) of the battery box (4,1), and the second controller (15,5) is used to control the suction cup (12,32) to be powered off after receiving the first signal, so as to make the push disk box (1,3) to be separated from the battery box (4,1);
and/or, the push disk box (1,3) further comprises a ejector rod (14,33) and a third controller (34), the third controller (34) is used to control the ejector rod (14,33) to stretch out and retract back, and the ejector rod (14,33) is used to drive the locking tongue (42,12) of a battery box (4,1) that fits with a lock base (71,21) of a battery compartment (7,2) to active and reset after pressing a button (43,13) of the battery box (4,1) that connects with the locking tongue (42,12);
preferably, the third controller (34) is communication connected with the first controller (2,4); the first controller (2,4) is used to send a second signal to the third controller (34) when driving the push disk box (1,3) forward to a second predetermined position, and the third controller (34) is used to control the ejector rod (14,33) to press the button (43,13) after receiving the second signal;
preferably, the battery box (4,1) locking control system further comprises a third detection unit (5,8), the third detection unit (5,8) is used to send an allowable signal to the first controller (2,4) after detecting that the locking tongue (42,12) and the lock base (71,21) are at a locking status, and the first controller (2,4) is further used to judge whether the allowable signal is received or not after it stops the push disk box (1,3) going forward, if yes, then controls the push disk box (1,3) to go back.

10. The battery box locking or unlocking control system according to at least one of claims 1-9, **characterized in that**: the battery box (4,1) locking control system further comprises a fourth detection unit (9,9), the fourth detection unit (9,9) is used to detect whether the push disk box (1,3) arrives at a second limited position or not during it goes forward, if yes, then sends a second pause signal to the first controller (2,4), and the first controller (2,4) is further used to pause the push disk box (1,3) going forward after receiving the second pause signal.

11. A battery box locking or unlocking control method of a battery box (4,1) locking and
unlocking control system according to at least one of claims 1-10, **characterized in that**:the battery box (4,1) unlocking control method comprises the following steps,
51, when the suction cup (12,32) of the push disk box (1,3) fits with a battery box (4,1), control the push disk box (1,3) to continue going forward, so as to make the suction cup (12,32) retract toward inside of the push disk box body (11,31);
S2, detect whether the suction cup (12,32) retracts to a first predetermined position or not, if yes, then control the push disk box (1,3) to stop going forward, if not, then execute the step S1;
or,
the battery box (4,1) locking control method comprises the following steps,
51, when the battery box (4,1) is within the battery compartment (7,2), control the push disk box (1,3) to continue going forward, so as to make the suction cup (12,32) retract toward inside of the push disk box body (11,31);
S2, detect whether the suction cup (12,32) retracts to a first predetermined position or not, if yes, then execute the step S3; if not, then execute the step S1;
S3, control the push disk to stop going forward, and control the push disk box (1,3) to be separated from the battery box (4,1).

12. The battery box locking or unlocking control method according to claim 11, **characterized in that**: in the step S2, after the push disk box (1,3) is stopped going forward, it further comprises the following step:
S21, control the push disk box (1,3) to go back;
preferably, in the executing process of step S21, it further comprises the following step,
detect whether the distance between the battery box (4,1) and the push disk box (1,3) exceeds a predetermined value or not, if yes, then pause the push disk box (1,3) going back;
and/or, in the executing process of step S21, it further comprises the following step,
detect whether the push disk box (1,3) arrives at a second limited position or not, if yes, then pause the push disk box (1,3) going back.

13. The battery box locking or unlocking control method according to claim 11 or 12, **characterized in that**:
the suction cup (12,32) is an electromagnetic suction cup (12,32),battery box (4,1)magnetic disk (41,11)
in the step S1, the suction cup (12,32) of the push disk box (1,3) fits with a magnetic disk (41,11) of the battery box (4,1); in the step S2, after controlling the push disk box (1,3) to stop going forward, further control the suction cup (12,32) to be powered on;
and/orthe push disk box (1,3) further comprises a ejector rod (14,33);
in the step S1, after the suction cup (12,32) of the push disk box (1,3) fits with the battery box (4,1), control the ejector rod (14,33) to press a button (43,13) of the battery box (4,1), so as to make the button (43,13) drive the locking tongue (42,12) of the battery box (4,1) that used to fits with a lock base (71,21) of a battery compartment (7,2) to be separated from the lock base (71,21).

14. The battery box locking or unlocking control method according to claim 13, **characterized in that**: prior to the step S1, it further comprises the following step,
before the suction cup (12,32) of the push disk box (1,3) fits with the battery box (4,1), control the ejector rod (14,33) to stretch out;
and/or, after the step S2, it further comprises the following step,
detect whether the locking tongue (42,12) and the lock base (71,21) are at a separating status or not, if yes, then control the push disk box (1,3) to go back.

15. The battery box locking or unlocking control method according to at least one of claims 11-14, **characterized in that**:
prior to the step S1, it further comprises the following step,
S0, control the push disk box (1,3) to go forward till the suction cup (12,32) of the push disk box (1,3) fits with the battery box (4,1);
preferably, in the executing process of the step S0, it further comprises the following step,
detect whether the push disk box (1,3) arrives at a first limited position or not, if yes, then pause the push disk box (1,3) going forward.

16. The battery box locking or unlocking control method according to at least one of claims 11-15, **characterized in that**: after the step S3, it further comprises the following step:
S4, control the push disk box (1,3) to go back;
preferably, in the executing process of step S4, it further comprises the following step,
detect whether the push disk box (1,3) arrives at a first limited position or not, if yes, then pause the push disk box (1,3) going back.

17. The battery box locking or unlocking control method according to at least one of claims 11-16, **characterized in that**:
the suction cup (12,32) is an electromagnetic suction cup (12,32),battery box (4,1)magnetic disk (41,11) and the suction cup (12,32) of the push disk box (1,3) and a magnetic disk (41,11) of the battery box (4,1) attract each other;
in the step S2, control the suction cup (12,32) to be powered off, so as to make the push disk box (1,3) to be separated from the battery box (4,1);
in the step S1, when the battery box (4,1) is within the battery compartment (7,2), the locking tongue (42,12) of the battery box (4,1) that used to fits with a lock base (71,21) of a battery compartment (7,2) is locked with the lock base (71,21) of the battery compartment (7,2);
prior to the step S1, it further comprises the following step:
before the battery box (4,1) is within the battery compartment (7,2), control the ejector rod (14,33) to press the button (43,13), so as to make the locking tongue (42,12) active and reset;
and/or, prior to the step S1, it further comprises the following step,
S0, the suction cup (12,32) of the push disk box (1,3) fits with the battery box (4,1) and remain connected, and the battery box (4,1) is ahead of the push disk box (1,3), control the push disk box (1,3) to go forward till the battery box (4,1) is within the battery compartment (7,2).

18. The battery box locking or unlocking control method according to claim 17, **characterized in that**:
in the executing process of the step S0, it further comprises the following step,
detect whether the push disk box (1,3) arrives at a second limited position or not, if yes, then pause the push disk box (1,3) going forward.

## Patentansprüche

1. Steuersystem zum Verriegeln oder Entriegeln eines Batteriekastens, **dadurch gekennzeichnet, dass** das Steuersystem zum Verriegeln und Entriegeln des Batteriekastens (4, 1) umfasst:
einen Schubladenkasten (1, 3), wobei der Schubladenkasten (1, 3) einen Schubladenkastenkörper (11, 31) und einen Saugnapf (12, 32) umfasst, und der Saugnapf (12, 32) teleskopisch auf einer Oberfläche des Schubladenkastenkörpers (11, 31) angeordnet ist, derart, dass er so konfiguriert werden kann, dass er in das Innere des Schubladenkastenkörpers (11, 31) zurückgezogen wird;
eine erste Steuerung (2, 4);
eine zweite Steuerung (15, 5), wobei die zweite Steuerung (15, 5) verwendet wird, um zwischen den beiden Zuständen des Verbindens oder des Trennens des Schubladenkastens (1, 3) mit dem Batteriekasten (4, 1) zu schalten;
eine erste Erfassungseinheit (3, 6), wobei die erste Erfassungseinheit (3, 6) verwendet wird, um ein erstes Signal an die erste Steuerung (2, 4) und die zweite Steuerung (15, 5) zu senden, nachdem sie erfasst hat, dass der Saugnapf (12, 32) in eine erste vorbestimmte Position zurückgezogen ist;
wobei zum Entriegeln des Batteriekastens (4, 1):
die erste Steuerung (2, 4) verwendet wird, um den Schubladenkasten (1, 3) nach vorne zu bewegen, so dass der Saugnapf (12, 32) des Schubladenkastens (1, 3) an einen Batteriekasten (4, 1) angepasst wird;
und die erste Steuerung (2, 4) weiter verwendet wird, um die Vorwärtsbewegung des Schubladenkastens (1, 3) nach Erhalt des ersten Signals zu stoppen;
oder,
wobei für die Verriegelung des Batteriekastens (4, 1):
der Saugnapf (12, 32) des Schubladenkastens (1, 3) an den Batteriekasten (4, 1) angepasst ist;
die erste Steuerung (2, 4) dazu verwendet wird, den Schubladenkasten (1, 3) vorwärts zu bewegen, um den Batteriekasten (4, 1) in das Batteriefach (7, 2) zu bringen, und die erste Steuerung (2, 4) weiterhin dazu verwendet wird, das Vorwärtsbewegen des Schubladenkastens (1, 3) zu stoppen, nachdem das erste Signal empfangen wurde, und die zweite Steuerung (15, 5) weiterhin dazu verwendet wird, die Trennung des Schubladenkastens (1, 3) von dem Batteriekasten (4, 1) zu steuern, nachdem das erste Signal empfangen wurde.

2. Steuersystem zum Verriegeln oder Entriegeln des Batteriekastens nach Anspruch 1, **dadurch gekennzeichnet, dass** die erste Steuerung (2, 4) ferner dazu verwendet wird, das Zurückfahren des Schubladenkastens (1, 3) zu steuern, nachdem die Vorwärtsbewegung des Schubladenkastens (1, 3) beendet wurde.

3. Steuersystem zum Verriegeln oder Entriegeln des Batteriekastens nach Anspruch 2, **dadurch gekennzeichnet, dass** das Steuersystem zum Entriegeln des Batteriekastens (4, 1) ferner eine dritte Erfassungseinheit (5, 8) umfasst, und die dritte Erfassungseinheit (5, 8) auf einer Fläche angeordnet ist, auf der der Schubladenkastenkörper (11, 31) dem Batteriekasten (4, 1) zugewandt ist, und die dritte Erfassungseinheit (5, 8) wird verwendet, um zu erkennen, ob der Abstand zwischen dem Batteriekasten (4, 1) und dem Schubladenkasten (1, 3) den vorbestimmten Wert überschreitet oder nicht, wenn der Schubladenkasten (1, 3) zurückfährt, wenn ja, dann sendet sie ein Trennsignal an die erste Steuerung (2, 4), und die erste Steuerung (2, 4) wird verwendet, um das Zurückfahren des Schubladenkastens (1, 3) nach dem Erhalt des Trennsignals anzuhalten; und/oder das Steuersystem zum Entriegeln des Batteriekastens (4, 1) weiterhin eine fünfte Erfassungseinheit (6) umfasst, und die fünfte Erfassungseinheit (6) dazu verwendet wird, zu erfassen, ob der Schubladenkasten (1, 3) während des Zurückfahrens an einer zweiten Grenzposition ankommt oder nicht, wenn ja, dann ein zweites Anhaltesignal an die erste Steuerung (2, 4) sendet, und die erste Steuerung (2, 4) weiter dazu verwendet wird, das Zurückfahren des Schubladenkastens (1, 3) nach dem Erhalt des zweiten Anhaltesignals anzuhalten.

4. Steuersystem zum Verriegeln oder Entriegeln des Batteriekastens nach mindestens einem der Ansprüche 1-3, **dadurch gekennzeichnet, dass**:
der Schubladenkasten (1, 3) ferner eine magnetische Steuerung (13) umfasst, der Saugnapf (12 32) ein elektromagnetischer Saugnapf (12, 32) ist, die erste Erfassungseinheit (3, 6) ferner dazu verwendet wird, das erste Signal an die magnetische Steuerung (13) zu senden, und die magnetische Steuerung (13) dazu verwendet wird, nach Erhalt des ersten Signals das Einschalten des Saugnapfs (12, 32) zu steuern;
der Saugnapf (12, 32) des Schubladenkastens (1, 3) an die Magnetscheibe (41, 11) des Batteriekastens (4, 1) angepasst ist.

5. Steuersystem zum Verriegeln oder Entriegeln des Batteriekastens nach mindestens einem der Ansprüche 1-4, **dadurch gekennzeichnet, dass**: der Schubladenkasten (1, 3) ferner eine Auswerfstange (14, 33) und eine zweite Steuerung (15, 5) umfasst, die zweite Steuerung (15, 5) das ein- und ausfahren der Auswerfstange (14, 33) steuert, und die Auswerfstange (14, 33) eine Verriegelungszunge (42, 12) des Batteriekastens (4, 1) antreibt, die an einen Verriegelungsboden (71, 21) eines Batteriefachs (7, 2) angepasst ist, um von dem Verriegelungsboden (71, 21) getrennt zu werden, nachdem ein Knopf (43, 13) des Batteriekastens (4, 1) gedrückt wurde, der mit der Verriegelungszunge (42, 12) verbunden ist.

6. Steuersystem zum Verriegeln oder Entriegeln des Batteriekastens nach Anspruch 5, **dadurch gekennzeichnet, dass**:
die zweite Steuerung (15, 5) mit der ersten Steuerung (2, 4) in Kommunikationsverbindung ist; die erste Steuerung (2, 4) ein zweites Signal an die zweite Steuerung (15, 5) zu sendet, wenn der Schubladenkasten (1, 3) zu einer zweiten vorbestimmten Position vorwärts bewegt wird, und die zweite Steuerung (15, 5) die Auswerfstange (14, 33) steuert, so dass sie nach Erhalt des zweiten Signals ausfährt;
und/oder das Steuersystem zum Entriegeln des Batteriekastens (4, 1) weiterhin eine zweite Erfassungseinheit (8, 7) umfasst, wobei die zweite Erfassungseinheit (8, 7) ein zulässiges Signal an die erste Steuerung (2, 4) sendet, nachdem sie erfasst hat, dass sich die Verriegelungszunge (42, 12) und der Verriegelungsboden (71, 21) in einem Trennungszustand befinden, und die erste Steuerung (2, 4) weiterbeurteilt, ob das zulässige Signal empfangen wird oder nicht, nachdem sie die Vorwärtsbewegung des Schubladenkastens, stoppt, wenn ja, da Zurückgehen des Schubladenkastens (1, 3) gesteuert wird.

7. Steuersystem zum Ver- oder Entriegeln des Batteriekastens nach mindestens einem der Ansprüche 1-6, **dadurch gekennzeichnet, dass**: das Steuersystem zum Entriegeln des Batteriekastens (4, 1) ferner eine vierte Erfassungseinheit (9, 9) umfasst, wobei die vierte Erfassungseinheit (9, 9) erfasst, ob der Schubladenkasten (1, 3) an einer ersten Grenzposition ankommt oder nicht, während er sich vorwärts bewegt, wenn ja, dann ein erstes Anhaltesignal an die erste Steuerung (2, 4) sendet, und die erste Steuerung (2, 4) ferner die Vorwärtsbewegung des Schubladenkastens (1, 3) nach Erhalt des ersten Anhaltesignals anhält.

8. Steuersystem zum Verriegeln oder Entriegeln des Batteriekastens nach mindestens einem der Ansprüche 1 bis 7, **dadurch gekennzeichnet, dass**: die erste Steuerung (2, 4) weiter den Schubladenkasten (1, 3) derart steuert, dass er zurückfährt, nachdem die Vorwärtsbewegung des Schubladenkastens (1, 3) gestoppt wurde.
vorzugsweise umfasst das Steuersystem zum Verriegeln des Batteriekastens (4, 1) ferner eine zweite Erfassungseinheit (8, 7), wobei die zweite Erfassungseinheit (8, 7) erfasst, ob der Schubladenkasten (1, 3) während des Zurückfahrens an einer ersten Grenzposition ankommt oder nicht wenn ja, ein erstes Anhaltesignal an die erste Steuerung (2, 4) sendet, und die erste Steuerung (2, 4) ferner das Zurückfahren des Schubladenkastens (1, 3) nach dem Erhalt des ersten Anhaltesignals anhält.

9. Steuersystem zum Verriegeln oder Entriegeln des Batteriekastens nach mindestens einem der Ansprüche 1-8, **dadurch gekennzeichnet, dass**: der Saugnapf (12, 32) ein elektromagnetischer Saugnapf (12, 32) ist, der Saugnapf (12, 32) des Schubladenkastens (1, 3) die Magnetscheibe (41, 11) des Batteriekastens (4, 1) anzieht, und die zweite Steuerung (15, 5) das Ausschalten des Saugnapfs (12, 32) nach dem Erhalt des ersten Signals steuert, um den Schubladenkasten (1, 3) von dem Batteriekasten (4, 1) zu trennen;
und/oder der Schubladenkasten (1, 3) weiterhin eine Auswerfstange (14, 33) und eine dritte Steuerung (34) umfasst, wobei die dritte Steuerung (34) die Auswerfstange (14, 33) derart steuert, dass sie aus- und eingefahren wird, und die Auswerfstange (14, 33) die Verriegelungszunge (42, 12) eines Batteriekastens (4, 1), die an einen Verriegelungsboden (71, 21) eines Batteriefachs (7, 2) angepasst ist, aktiviert und zurückzusetzt, nachdem ein Knopf (43, 13) des Batteriekastens (4, 1) gedrückt wurde, der mit der Verriegelungszunge (42, 12) verbunden ist;
vorzugsweise die dritte Steuerung (34) mit der ersten Steuerung (2, 4) in Kommunikationsverbindung; wobei die erste Steuerung (2, 4) ein zweites Signal an die dritte Steuerung (34) sendet, wenn der Schubladenkasten (1, 3) in eine zweite vorbestimmte Position vorwärts gefahren wird, und die dritte Steuerung (34) die Auswerfstange (14, 33) steuert, um nach dem Erhalt des zweiten Signals den Knopf (43, 13) zu drücken;
vorzugsweise umfasst das Steuerungssystem zum Verriegeln des Batteriekastens (4, 1) ferner eine dritte Erfassungseinheit (5, 8), wobei die dritte Erfassungseinheit (5, 8) ein zulässiges Signal an die erste Steuerung (2, 4) sendet, nachdem sie erfasst hat, dass sich die Verriegelungszunge (42, 12) und der Verriegelungsboden (71, 21) in einem Verriegelungszustand befinden, und die erste Steuerung (2, 4) weiter beurteilt, ob das zulässige Signal empfangen wurde oder nicht, nachdem sie die Vorwärtsbewegung des Schubladenkastens (1, 3) stoppt, wenn ja, das Zurückfahren des Schubladenkastens (1, 3) steuert.

10. Steuersystem zum Verriegeln oder Entriegeln des Batteriekastens nach mindestens einem der Ansprüche 1-9, **dadurch gekennzeichnet, dass**: das Steuersystem zum Verriegeln des Batteriekastens (4, 1) ferner eine vierte Erfassungseinheit (9, 9) umfasst, wobei die vierte Erfassungseinheit (9, 9) erfasst, ob der Schubladenkasten (1, 3) während der Vorwärtsbewegung an einer zweiten Grenzposition ankommt oder nicht, wenn ja, dann ein zweites Anhaltesignal an die erste Steuerung (2, 4) sendet, und die erste Steuerung (2, 4) ferner die Vorwärtsbewegung des Schubladenkastens (1, 3) nach Erhalt des zweiten Anhaltesignals anhält.

11. Verfahren zur Steuerung der Verriegelung oder Entriegelung eines Batteriekastens (4, 1) für ein Steuersystem zum Verriegeln oder Entriegeln eines Batteriekastens, nach mindestens einem der Ansprüche 1-10, **dadurch gekennzeichnet, dass** das Verfahren zur Entriegelung des Batteriekastens (4, 1) die folgenden Schritte umfasst,
S1, wenn der Saugnapf (12, 32) des Schubladenkastens (1, 3) mit einem Batteriekasten (4, 1) zusammenpasst, Steuern des Schubladenkastens (1, 3), um die Vorwärtsbewegung fortzuführen, so dass sich der Saugnapf (12, 32) in das Innere des Schubladenkastenkörpers (11, 31) zurückzieht;
S2, Erkennen, ob der Saugnapf (12, 32) sich in eine erste vorbestimmte Position zurückzieht oder nicht, wenn ja, dann Steuerung des Schubladenkastens (1, 3), um die Vorwärtsbewegung zu stoppen, wenn nicht, dann Ausführung von Schritt S1;
oder,
das Verfahren zur Steuerung der Verriegelung des Batteriekastens (4, 1) die folgenden Schritte umfasst,
S1, wenn sich der Batteriekasten (4, 1) im Batteriefach (7, 2) befindet,
Steuern des Schubladenkastens (1, 3), um die Vorwärtsbewegung fortzuführen, so dass sich der Saugnapf (12, 32) in das Innere des Schubladenkastenkörpers (11, 31) zurückzieht;
S2, Erkennen, ob sich der Saugnapf (12, 32) in eine erste vorbestimmte Position zurückzieht oder nicht, wenn ja, dann Ausführen des Schritts S3; wenn nicht, dann Ausführen des Schritts S1;
S3, Steuern der Schublade, um die Vorwärtsbewegung zu stoppen, und Steuern des Schubladenkastens (1, 3) so, dass er von dem Batteriekasten (4, 1) getrennt wird.

12. Verfahren zur Steuerung der Verriegelung oder Entriegelung des Batteriekastens nach Anspruch 11, **dadurch gekennzeichnet, dass** im Schritt S2, nachdem die Vorwärtsbewegung des Schubladenkastens (1, 3) angehalten wurde, er weiter den folgenden Schritt umfasst:
S21, Steuern des Zurückfahrens des Schubladenkastens (1, 3);
vorzugsweise umfasst der Ausführungsprozess von Schritt S21 weiter den folgenden Schritt,
Erkennen, ob der Abstand zwischen dem Batteriekasten (4, 1) und dem Schubladenkasten (1, 3) einen vorgegebenen Wert überschreitet oder nicht, wenn ja, dann Anhalten des Zurückfahrens des Schubladenkastens (1, 3);
und/oder, der Ausführungsprozess von Schritt S21, weiter den folgenden Schritt umfasst,
Erkennen, ob der Schubladenkasten (1, 3) an einer zweiten Grenzposition ankommt oder nicht, wenn ja, dann Anhalten des Zurückfahrens des Schubladenkastens (1, 3).

13. Verfahren zur Steuerung der Verriegelung oder Entriegelung des Batteriekastens nach Anspruch 11 oder 12, **dadurch gekennzeichnet, dass**
der Saugnapf (12, 32) ein elektromagnetischer Saugnapf (12, 32) ist, Batteriekasten (4, 1) Magnetscheibe (41, 11)
im Schritt S1 der Saugnapf (12, 32) des Schubladenkastens (1, 3) an eine Magnetscheibe (41, 11) des Batteriekastens (4, 1) angepasst ist; im Schritt S2, nachdem der Schubladenkasten (1, 3) derart gesteuert wurde, dass die Vorwärtsbewegung gestoppt wurde, weiter das Einschalten des Saugnapfs (12, 32) gesteuert wird;
und/oder der Schubladenkasten (1, 3) weiter eine Auswerfstange (14, 33) umfasst;
im Schritt S1, nachdem der Saugnapf (12, 32) des Schubladenkastens (1, 3) an den Batteriekastens (4, 1) angepasst ist, Steuern der Auswerfstange (14, 33) einen Knopf (43, 13) des Batteriekastens (4, 1) zu drücken, um den Knopf (43, 13) dazu zu bringen, die Verriegelungszunge (42, 12) der Batteriebox (4, 1) anzutreiben, die an einen Verriegelungsboden (71, 21) eines Batteriekastens (7, 2) angepasst ist, von dem Verriegelungsboden (71, 21) zu trennen.

14. Verfahren zur Steuerung der Verriegelung oder Entriegelung des Batteriekastens nach Anspruch 13, **dadurch gekennzeichnet, dass** es vor dem Schritt S1 weiter den folgenden Schritt umfasst:
bevor der Saugnapf (12, 32) des Schubladenkastens (1, 3) an die Batteriebox (4, 1) angepasst ist, Steuern des Ausfahrens der Auswurfstange (14, 33);
und/oder, nach dem Schritt S2, weiter den folgenden Schritt umfasst: Erkennen, ob sich die Verriegelungszunge (42, 12) und der Verriegelungsboden (71, 21) in einem Trennungszustand befinden oder nicht, wenn ja, dann Steuern des Zurückfahrens des Schubladenkastens (1, 3).

15. Verfahren zum Verriegeln oder Entriegeln des Batteriekastens nach mindestens einem der Ansprüche 11-14, **dadurch gekennzeichnet, dass**:
es vor dem Schritt S1 weiter den folgenden Schritt umfasst:
S0, Steuern der Vorwärtsbewegung des Schubladenkastens (1, 3), bis der Saugnapf (12, 32) des Schubladenkasten (1, 3) an den Batteriekasten (4, 1) angepasst ist;
vorzugsweise umfasst der Ausführungsprozess des Schritts S0 weiter den folgenden Schritt,
Erkennen, ob der Schubladenkasten (1, 3) an einer ersten Grenzposition ankommt oder nicht, wenn ja, dann Anhalten der Vorwärtsbewegung des Schubladenkastens (1, 3).

16. Verfahren zum Verriegeln oder Entriegeln des Batteriekastens nach mindestens einem der Ansprüche 11-15, **dadurch gekennzeichnet, dass** es nach dem Schritt S3 weiter den folgenden Schritt umfasst:
S4, Steuern des Zurückfahrens des Schubladenkastens (1, 3);
vorzugsweise umfasst der Ausführungsprozess von Schritt S4 weiter den folgenden Schritt,
Erkennen, ob der Schubladenkasten (1, 3) an einer ersten Grenzposition ankommt oder nicht, wenn ja, dann Anhalten des Zurückfahrens des Schubladenkastens (1, 3).

17. Verfahren zum Verriegeln oder Entriegeln des Batteriekastens nach mindestens einem der Ansprüche 11-16, **dadurch gekennzeichnet, dass**:
der Saugnapf (12, 32) ein elektromagnetischer Saugnapf (12, 32) ist, Batteriekasten (4, 1) Magnetscheibe (41, 11) und der Saugnapf (12, 32) des Schubladenkastens (1, 3) und eine Magnetscheibe (41, 11) des Batteriekastens (4, 1) sich gegenseitig anziehen;
in dem Schritt S2 das Ausschalten des Saugnapfs (12, 32) steuern, damit der Schubladenkasten (1, 3) von dem Batteriekasten (4, 1) getrennt werden kann;
in dem Schritt S1, wenn der Batteriekasten (4, 1) sich innerhalb des Batteriefachs (7, 2) befindet, die Verriegelungszunge (42, 12) der Batteriebox (4, 1), die an einen Verriegelungsboden (71, 21) eines Batteriefachs (7, 2) angepasst ist, mit dem Verriegelungsboden (71, 21) des Batteriefachs (7, 2) verriegelt wird;
vor dem Schritt S1 umfasst es weiter den folgenden Schritt:
bevor der Batteriekasten (4, 1) innerhalb des Batteriefachs (7, 2) ist, Steuerung der Auswerfstange (14, 33), um den Knopf (43, 13) zu drücken, so dass die Verriegelungszunge (42, 12) aktiviert und zurückgestellt wird;
und/oder, vor dem Schritt S1 es weiter den folgenden Schritt umfasst, S0, der Saugnapf (12, 32) des Schubladenkastens (1, 3) an den Batteriekasten (4, 1) angepasst ist und verbunden bleibt, und der Batteriekasten (4, 1) dem Schubladenkasten (1, 3) voraus ist, Steuern der Vorwärtsbewegung des Schubladenkastens (1, 3) bis der Batteriekasten (4, 1) im Batteriefach (7, 2) ist.

18. Verfahren zur Steuerung der Verriegelung oder Entriegelung des Batteriekastens Anspruch 17, **dadurch gekennzeichnet, dass**:
in dem Ausführungsprozess des Schritts S0 es weiter den folgenden Schritt umfasst:
Erkennen, ob der Schubladenkasten (1, 3) an einer zweiten Grenzposition ankommt oder nicht, wenn ja, dann Anhalten der Vorwärtsbewegung des Schubladenkastens (1, 3).

## Revendications

1. Système de commande de verrouillage ou de déverrouillage de boîtier de batterie, **caractérisé en ce que** le système de commande de verrouillage et de déverrouillage de boîtier de batterie (4, 1) comprend :
un boîtier à disque de poussée (1, 3), le boîtier à disque de poussée (1, 3) comprend un corps de boîtier à disque de poussée (11, 31) et une ventouse (12, 32), et la ventouse (12, 32) est agencée de manière télescopique sur une surface du corps de boîtier à disque de poussée (11, 31) de telle sorte qu'elle peut être configurée pour être rétractée vers l'intérieur du corps de boîtier à disque de poussée (11, 31) ;
un premier dispositif de commande (2, 4) ;
un deuxième dispositif de commande (15, 5), le deuxième dispositif de commande (15, 5) est utilisé pour basculer dans les deux conditions de liaison ou séparation du boîtier à disque de poussée (1, 3) au boîtier de batterie (4, 1) ;
une première unité de détection (3, 6), la première unité de détection (3, 6) est utilisée pour envoyer un premier signal au premier dispositif de commande (2, 4) et au deuxième dispositif de commande (15, 5) après la détection que la ventouse (12, 32) s'est rétractée vers une première position prédéterminée ;
dans lequel pour le déverrouillage du boîtier de batterie (4, 1) :
le premier dispositif de commande (2, 4) est utilisé pour entraîner le boîtier à disque de poussée (1, 3) vers l'avant, de manière à amener la ventouse (12, 32) du boîtier à disque de poussée (1, 3) à s'ajuster avec un boîtier de batterie (4, 1) ;
et le premier dispositif de commande (2, 4) est en outre utilisé pour arrêter d'entraîner le boîtier à disque de poussée (1, 3) vers l'avant après la réception du premier signal ;
ou,
dans lequel pour le verrouillage du boîtier de batterie (4, 1) :
la ventouse (12, 32) du boîtier à disque de poussée (1, 3) est utilisée pour s'ajuster avec le boîtier de batterie (4, 1) ;
le premier dispositif de commande (2, 4) est utilisé pour entraîner le boîtier à disque de poussée (1, 3) vers l'avant, de manière à amener le boîtier de batterie (4, 1) à aller dans le compartiment de batterie (7, 2), et le premier dispositif de commande (2, 4) est en outre utilisé pour arrêter d'entraîner le boîtier à disque de poussée (1, 3) vers l'avant après la réception du premier signal, et le deuxième dispositif de commande (15, 5) est en outre utilisé pour commander le boîtier à disque de poussée (1, 3) pour qu'il soit séparé du boîtier de batterie (4, 1) après la réception du premier signal.

2. Système de commande de verrouillage ou de déverrouillage de boîtier de batterie selon la revendication 1, **caractérisé en ce que** le premier dispositif de commande (2, 4) est en outre utilisé pour commander le boîtier à disque de poussée (1, 3) pour qu'il revienne après qu'il a arrêté d'entraîner le boîtier à disque de poussée (1, 3) vers l'avant.

3. Système de commande de verrouillage ou de déverrouillage de boîtier de batterie selon la revendication 2, **caractérisé en ce que** le système de commande de déverrouillage de boîtier de batterie (4, 1) comprend en outre une troisième unité de détection (5, 8), et la troisième unité de détection (5, 8) est agencée sur une surface où le corps de boîtier à disque de poussée (11, 31) est tourné vers le boîtier de batterie (4, 1), et la troisième unité de détection (5, 8) est utilisée pour détecter si la distance entre le boîtier de batterie (4, 1) et le boîtier à disque de poussée (1, 3) dépasse la valeur prédéterminée ou non lorsque le boîtier à disque de poussée (1, 3) revient, si oui, envoie alors un signal de séparation au premier dispositif de commande (2, 4) et le premier dispositif de commande (2, 4) est utilisé pour mettre en pause le retour du boîtier à disque de poussée (1, 3) après la réception du signal de séparation ;
et/ou, le système de commande de déverrouillage de boîtier de batterie (4, 1) comprend en outre une cinquième unité de détection (6), et la cinquième unité de détection (6) est utilisée pour détecter si le boîtier à disque de poussée (1, 3) arrive au niveau d'une deuxième position limitée ou non pendant qu'il revient, si oui, envoie alors un deuxième signal de pause au premier dispositif de commande (2, 4), et le premier dispositif de commande (2, 4) est en outre utilisé pour mettre en pause le retour du boîtier à disque de poussée (1, 3) après la réception du deuxième signal de pause.

4. Système de commande de verrouillage ou de déverrouillage de boîtier de batterie selon au moins l'une des revendications 1-3, **caractérisé en ce que** :
le boîtier à disque de poussée (1, 3) comprend en outre un dispositif de commande magnétique (13), la ventouse (12, 32) est une ventouse électromagnétique (12, 32), la première unité de détection (3, 6) est en outre utilisée pour envoyer le premier signal au dispositif de commande magnétique (13), et le dispositif de commande magnétique (13) est utilisé pour commander la ventouse (12, 32) pour qu'elle soit mise sous tension après la réception du premier signal ;
la ventouse (12, 32) du boîtier à disque de poussée (1, 3) est utilisée pour s'ajuster avec le disque magnétique (41, 11) du boîtier de batterie (4, 1).

5. Système de commande de verrouillage ou de déverrouillage de boîtier de batterie selon au moins l'une des revendications 1-4, **caractérisé en ce que** :
le boîtier à disque de poussée (1, 3) comprend en outre une tige d'éjection (14, 33) et un deuxième dispositif de commande (15, 5), le deuxième dispositif de commande (15, 5) est utilisé pour commander la tige d'éjection (14, 33) pour qu'elle s'étende et se rétracte, et la tige d'éjection (14, 33) est utilisée pour conduire une languette de verrouillage (42, 12) du boîtier de batterie (4, 1) qui s'ajuste avec une base de verrouillage (71, 21) d'un compartiment de batterie (7, 2) à être séparée de la base de verrouillage (71,21) après avoir appuyé sur un bouton (43, 13) du boîtier de batterie (4, 1) qui est relié à la languette de verrouillage (42, 12).

6. Système de commande de verrouillage ou de déverrouillage de boîtier de batterie selon la revendication 5, **caractérisé en ce que** :
le deuxième dispositif de commande (15, 5) est relié en communication au premier dispositif de commande (2, 4) ; le premier dispositif de commande (2, 4) est utilisé pour envoyer un deuxième signal au deuxième dispositif de commande (15, 5) lors de l'entraînement du boîtier à disque de poussée (1,3) vers l'avant vers une deuxième position prédéterminée, et le deuxième dispositif de commande (15, 5) est utilisé pour commander la tige d'éjection (14, 33) pour qu'elle s'étende après la réception du deuxième signal ;
et/ou, le système de commande de déverrouillage de boîtier de batterie (4, 1) comprend en outre une deuxième unité de détection (8, 7), la deuxième unité de détection (8, 7) est utilisée pour envoyer un signal admissible au premier dispositif de commande (2, 4) après la détection que la languette de verrouillage (42, 12) et la base de verrouillage (71, 21) sont à un état de séparation, et le premier dispositif de commande (2, 4) est en outre utilisé pour juger si le signal admissible est reçu ou non après qu'il a arrêté le boîtier à disque de poussée (1, 3) d'avancer, si oui, commande alors le boîtier à disque de poussée (1, 3) pour qu'il revienne.

7. Système de commande de verrouillage ou de déverrouillage de boîtier de batterie selon au moins l'une des revendications 1-6, **caractérisé en ce que** : le système de commande de déverrouillage de boîtier de batterie (4, 1) comprend en outre une quatrième unité de détection (9, 9), la quatrième unité de détection (9, 9) est utilisée pour détecter si le boîtier à disque de poussée (1, 3) arrive au niveau d'une première position limitée ou non pendant qu'il avance, si oui, envoie alors un premier signal de pause au premier dispositif de commande (2, 4), et le premier dispositif de commande (2, 4) est en outre utilisé pour mettre en pause l'avancée du boîtier à disque de poussée (1, 3) après la réception du premier signal de pause.

8. Système de commande de verrouillage ou de déverrouillage de boîtier de batterie selon au moins l'une des revendications 1-7, **caractérisé en ce que** : le premier dispositif de commande (2, 4) est en outre utilisé pour commander le boîtier à disque de poussée (1, 3) pour qu'il revienne après qu'il a arrêté l'entraînement du boîtier à disque de poussée (1, 3) vers l'avant.
de préférence, le système de commande de verrouillage de boîtier de batterie (4, 1) comprend en outre une deuxième unité de détection (8, 7), la deuxième unité de détection (8, 7) est utilisée pour détecter si le boîtier à disque de poussée (1, 3) arrive au niveau d'une première position limitée ou non pendant qu'il revient, si oui, envoie un premier signal de pause au premier dispositif de commande (2, 4), et le premier dispositif de commande (2, 4) est en outre utilisé pour mettre en pause le retour du boîtier à disque de poussée (1, 3) après la réception du premier signal de pause.

9. Système de commande de verrouillage ou de déverrouillage de boîtier de batterie selon au moins l'une des revendications 1-8, **caractérisé en ce que** : la ventouse (12, 32) est une ventouse électromagnétique (12, 32), la ventouse (12, 32) du boîtier à disque de poussée (1, 3) est utilisée pour être attirée vers le disque magnétique (41, 11) du boîtier de batterie (4, 1), et le deuxième dispositif de commande (15, 5) est utilisé pour commander la ventouse (12, 32) pour qu'elle soit mise hors tension après la réception du premier signal, de manière à amener le boîtier à disque de poussée (1, 3) à être séparé du boîtier de batterie (4, 1) ;
et/ou, le boîtier à disque de poussée (1, 3) comprend en outre une tige d'éjection (14, 33) et un troisième dispositif de commande (34), le troisième dispositif de commande (34) est utilisé pour commander la tige d'éjection (14, 33) pour qu'elle s'étende et se rétracte, et la tige d'éjection (14, 33) est utilisée pour conduire la languette de verrouillage (42, 12) d'un boîtier de batterie (4, 1) qui s'ajuste avec une base de verrouillage (71, 21) d'un compartiment de batterie (7, 2) à s'activer et se remettre à l'état initial après avoir appuyé un bouton (43, 13) du boîtier de batterie (4, 1) qui est relié à la languette de verrouillage (42, 12) ;
de préférence, le troisième dispositif de commande (34) est relié en communication au premier dispositif de commande (2, 4) ; le premier dispositif de commande (2, 4) est utilisé pour envoyer un deuxième signal au troisième dispositif de commande (34) lors de l'entraînement du boîtier à disque de poussée (1,3) vers l'avant vers une deuxième position prédéterminée, et le troisième dispositif de commande (34) est utilisé pour commander la tige d'éjection (14, 33) pour qu'elle appuie sur le bouton (43, 13) après la réception du deuxième signal ;
de préférence, le système de commande de verrouillage de boîtier de batterie (4, 1) comprend en outre une troisième unité de détection (5, 8), la troisième unité de détection (5, 8) est utilisée pour envoyer un signal admissible au premier dispositif de commande (2, 4) après la détection que la languette de verrouillage (42, 12) et la base de verrouillage (71, 21) sont à un état de verrouillage, et le premier dispositif de commande (2, 4) est en outre utilisé pour juger si le signal admissible est reçu ou non après qu'il a arrêté le boîtier à disque de poussée (1, 3) d'avancer, si oui, commande alors le boîtier à disque de poussée (1, 3) pour qu'il revienne.

10. Système de commande de verrouillage ou de déverrouillage de boîtier de batterie selon au moins l'une des revendications 1-9, **caractérisé en ce que** : le système de commande de verrouillage de boîtier de batterie (4, 1) comprend en outre une quatrième unité de détection (9, 9), la quatrième unité de détection (9, 9) est utilisée pour détecter si le boîtier à disque de poussée (1, 3) arrive au niveau d'une deuxième position limitée ou non pendant qu'il avance, si oui, envoie alors un deuxième signal de pause au premier dispositif de commande (2, 4), et le premier dispositif de commande (2, 4) est en outre utilisé pour mettre en pause l'avancée du boîtier à disque de poussée (1, 3) après la réception du deuxième signal de pause.

11. Procédé de commande de verrouillage ou de déverrouillage de boîtier de batterie d'un système de commande de verrouillage et de déverrouillage de boîtier de batterie (4, 1) selon au moins l'une des revendications 1-10, **caractérisé en ce que** : le procédé de commande de déverrouillage de boîtier de batterie (4, 1) comprend les étapes suivantes,
S1, lorsque la ventouse (12, 32) du boîtier à disque de poussée (1, 3) s'ajuste avec un boîtier de batterie (4, 1), la commande du boîtier à disque de poussée (1, 3) pour qu'il continue d'avancer, de manière à amener la ventouse (12, 32) à se rétracter vers l'intérieur du corps de boîtier à disque de poussée (11, 31) ;
S2, le fait de détecter si la ventouse (12, 32) se rétracte vers une première position prédéterminée ou non, si oui, alors la commande du boîtier à disque de poussée (1, 3) pour qu'il s'arrête d'avancer, si non, alors l'exécution de l'étape S1 ;
ou,
le procédé de commande de verrouillage de boîtier de batterie (4, 1) comprend les étapes suivantes,
S1, lorsque le boîtier de batterie (4, 1) est dans le compartiment de batterie (7, 2), la commande du boîtier à disque de poussée (1, 3) pour qu'il continue d'avancer, de manière à amener la ventouse (12, 32) à se rétracter vers l'intérieur du corps de boîtier à disque de poussée (11,31) ; S2, le fait de détecter si la ventouse (12, 32) se rétracte vers une première position prédéterminée ou non, si oui, alors l'exécution de l'étape S3 ; si non, alors l'exécution de l'étape S1 ;
S3, la commande du disque de poussée pour qu'il arrête d'avancer, et la commande du boîtier à disque de poussée (1, 3) pour qu'il soit séparé du boîtier de batterie (4, 1).

12. Procédé de commande de verrouillage ou de déverrouillage de boîtier de batterie selon la revendication 11, **caractérisé en ce que** : dans l'étape S2, après que le boîtier à disque de poussée (1, 3) est arrêté d'avancer, il comprend en outre l'étape suivante :
S21, la commander du boîtier à disque de poussée (1, 3) pour qu'il revienne ;
de préférence, dans le processus d'exécution de l'étape S21, il comprend en outre l'étape suivante,
le fait de détecter si la distance entre le boîtier de batterie (4, 1) et le boîtier à disque de poussée (1, 3) dépasse une valeur prédéterminée ou non, si oui, alors la mise en pause du retour du boîtier à disque de poussée (1, 3) ;
et/ou, dans le processus d'exécution de l'étape S21, il comprend en outre l'étape suivante,
le fait de détecter si le boîtier à disque de poussée (1, 3) arrive au niveau d'une deuxième position limitée ou non, si oui, alors la mise en pause du retour du boîtier à disque de poussée (1, 3).

13. Procédé de commande de verrouillage ou de déverrouillage de boîtier de batterie selon la revendication 11 ou 12, **caractérisé en ce que** :
la ventouse (12, 32) est une ventouse électromagnétique (12, 32), boîtier de batterie (4, 1) disque magnétique (41, 11)
dans l'étape S1, la ventouse (12, 32) du boîtier à disque de poussée (1, 3) s'ajuste avec un disque magnétique (41, 11) du boîtier de batterie (4, 1) ; dans l'étape S2, après la commande du boîtier à disque de poussée (1, 3) pour qu'il arrête d'avancer, en outre la commande de la ventouse (12, 32) pour qu'elle soit mise sous tension ;
et/ou le boîtier à disque de poussée (1, 3) comprend en outre une tige d'éjection (14, 33) ;
dans l'étape S1, après que la ventouse (12, 32) du boîtier à disque de poussée (1, 3) s'est ajustée avec le boîtier de batterie (4, 1), la commande de la tige d'éjection (14, 33) pour qu'elle appuie un bouton (43, 13) du boîtier de batterie (4, 1), de manière à amener le bouton (43, 13) à conduire la languette de verrouillage (42, 12) du boîtier de batterie (4, 1) qui est utilisée pour s'ajuster avec une base de verrouillage (71,21) d'un compartiment de batterie (7, 2) à être séparée de la base de verrouillage (71, 21).

14. Procédé de commande de verrouillage ou de déverrouillage de boîtier de batterie selon la revendication 13, **caractérisé en ce que** : avant l'étape S1, il comprend en outre l'étape suivante,
avant que la ventouse (12, 32) du boîtier à disque de poussée (1, 3) s'ajuste avec le boîtier de batterie (4, 1), la commande de la tige d'éjection (14, 33) pour qu'elle s'étende ;
et/ou, après l'étape S2, il comprend en outre l'étape suivante,
le fait de détecter si la languette de verrouillage (42, 12) et la base de verrouillage (71, 21) sont à un état de séparation ou non, si oui, alors la commande du boîtier à disque de poussée (1, 3) pour qu'il revienne.

15. Procédé de commande de verrouillage ou de déverrouillage de boîtier de batterie selon au moins l'une des revendications 11-14, **caractérisé en ce que** :
avant l'étape S1, il comprend en outre l'étape suivante,
S0, la commande du boîtier à disque de poussée (1, 3) pour qu'il avance jusqu'à ce que la ventouse (12, 32) du boîtier à disque de poussée (1, 3) s'ajuste avec le boîtier de batterie (4, 1) ;
de préférence, dans le processus d'exécution de l'étape S0, il comprend en outre l'étape suivante,
le fait de détecter si le boîtier à disque de poussée (1, 3) arrive au niveau d'une première position limitée ou non, si oui, alors la mise en pause de l'avancée du boîtier à disque de poussée (1, 3).

16. Procédé de commande de verrouillage ou de déverrouillage de boîtier de batterie selon au moins l'une des revendications 11-15, **caractérisé en ce que** : après l'étape S3, il comprend en outre l'étape suivante :
S4, la commande du boîtier à disque de poussée (1, 3) pour qu'il revienne ;
de préférence, dans le processus d'exécution de l'étape S4, il comprend en outre l'étape suivante,
le fait de détecter si le boîtier à disque de poussée (1, 3) arrive au niveau d'une première position limitée ou non, si oui, alors la mise en pause du retour du boîtier à disque de poussée (1, 3).

17. Procédé de commande de verrouillage ou de déverrouillage de boîtier de batterie selon au moins l'une des revendications 11-16, **caractérisé en ce que** :
la ventouse (12, 32) est une ventouse électromagnétique (12, 32), boîtier de batterie (4, 1) disque magnétique (41, 11) et la ventouse (12, 32) du boîtier à disque de poussée (1, 3) et un disque magnétique (41, 11) du boîtier de batterie (4, 1) s'attirent ;
dans l'étape S2, la commande de la ventouse (12, 32) pour qu'elle soit mise hors tension, de manière à amener le boîtier à disque de poussée (1, 3) à être séparé du boîtier de batterie (4, 1) ;
dans l'étape S1, lorsque le boîtier de batterie (4, 1) est dans le compartiment de batterie (7, 2), la languette de verrouillage (42, 12) du boîtier de batterie (4, 1) qui est utilisée pour s'ajuster avec une base de verrouillage (71, 21) d'un compartiment de batterie (7, 2) est verrouillée avec la base de verrouillage (71, 21) du compartiment de batterie (7, 2) ; avant l'étape S1, il comprend en outre l'étape suivante :
avant que le boîtier de batterie (4, 1) ne soit dans le compartiment de batterie (7, 2), la commande de la tige d'éjection (14, 33) pour qu'elle appuie sur le bouton (43, 13), de manière à amener la languette de verrouillage (42, 12) à s'activer et se remettre à l'état initial ;
et/ou, avant l'étape S1, il comprend en outre l'étape suivante,
S0, la ventouse (12, 32) du boîtier à disque de poussée (1, 3) s'ajuste avec le boîtier de batterie (4, 1) et reste reliée, et le boîtier de batterie (4, 1) est devant le boîtier à disque de poussée (1, 3), la commande du boîtier à disque de poussée (1, 3) pour qu'il avance jusqu'à ce que le boîtier de batterie (4, 1) soit dans le compartiment de batterie (7, 2).

18. Procédé de commande de verrouillage ou de déverrouillage de boîtier de batterie selon la revendication 17, **caractérisé en ce que** :
dans le processus d'exécution de l'étape S0, il comprend en outre l'étape suivante,
le fait de détecter si le boîtier à disque de poussée (1, 3) arrive au niveau d'une deuxième position limitée ou non, si oui, alors la mise en pause de l'avancée du boîtier à disque de poussée (1, 3).
